# EUROPEAN PATENT APPLICATION

(11) **EP 2 869 191 A1**
(43) Date of publication of application: **06.05.2015**
(21) Application number: 14189620.9
(22) Date of filing: 21.10.2014
(51) Int. Cl.: G06F 9/44

(54) **Window displaying method of mobile terminal and mobile terminal**

(30) Priority: 31.10.2013 CN 201310534221
(71) Applicant: Hisense Mobile Communications Technology Co., Ltd., Qingdao Shandong 266071 (CN)
(72) Inventor: Zhu, Pingyang, 266071 Qingdao (CN); Chen, Yanfang, 266071 Qingdao (CN); Zhang, Yun, 266071 Qingdao (CN)
(74) Representative: Cohausz & Florack

(57) **Abstract**

Some embodiments of the application provide a window displaying method of a mobile terminal and the mobile terminal. The method may comprise the following operations: determining that a starting mode of an Activity to be started is a window mode; and obtaining first window attribute data corresponding to the Activity to be started to display the Activity to be started according to the first window attribute data.

## Description

### Cross-References to Related Applications

The present application claims priority from Chinese Patent Application No. 201310534221.2, filed with the Chinese Patent Office on October 31, 2013 and entitled "Window Displaying Method and Device used for Android Platform".

### Field

The disclosure relates to the technical field of communications, and in particular to a window displaying method of a mobile terminal and the mobile terminal.

### Background

Mobile terminals (such as mobile phones, tablet computers and the like) based on various platforms (such as an Android platform, an IOS platform, a Symbian platform, a Windows Phone system, a Sailfish OS system, an Ubuntu Touch system or any other mobile operating systems and the like) are widely used. These mobile terminals generally display pages in a full-screen manner, that is, a user of such a mobile terminal may see only one display page on the mobile terminal.

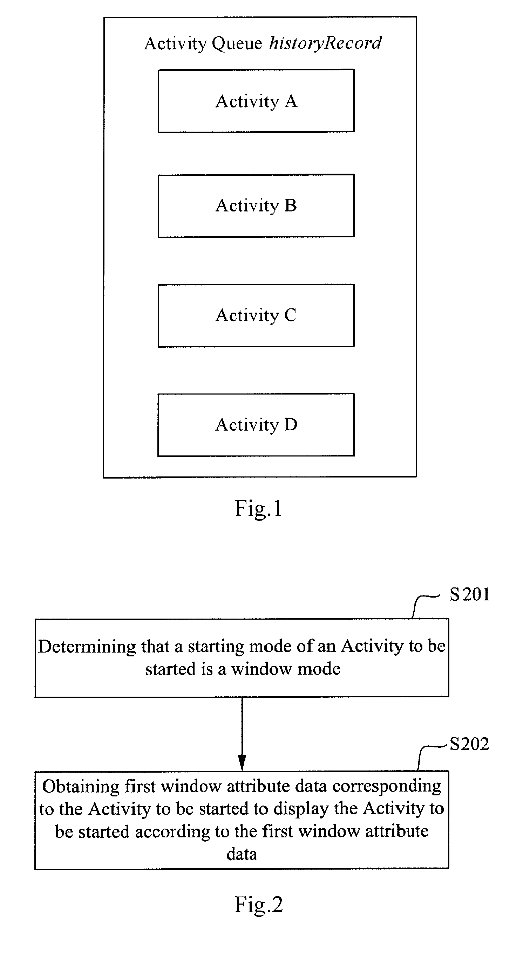

For example, in a mobile terminal based on the Android platform, one application program comprises one or more Activities, where each Activity is responsible for displaying and processing one page, that is, the opening of a new page in one application program is implemented by starting a new Activity. Currently, an Activity queue *historyRecord* manages the Activities, and the sort order of the Activities in the Activity queue *historyRecord* is the scheduling order of the Activities, where the Activity started at last ranks first in the queue and is in an activated state, and other Activities are in a suspended state or a stop state. For example, as shown in Fig. 1, the first one in the Activity queue *historyRecord* is Activity A, followed by Activity B, Activity C and Activity D in sequence. The currently displayed page is the page corresponding to Activity A; when Activity A is closed, the page corresponding to Activity B will be displayed; when Activity C is scheduled out for display, Activity C will rank in front of Activity B, and Activity B will rank second in the queue.

### Summary

At one aspect, an embodiment of the disclosure provides a window displaying method of a mobile terminal, which includes:
determining that a starting mode of an Activity to be started is a window mode; and
obtaining first window attribute data corresponding to the Activity to be started to display the Activity to be started according to the first window attribute data.

Optionally, the operation of obtaining the first window attribute data corresponding to the Activity to be started may comprise:
determining that an opened window is used when the Activity to be started is started; and
taking out second window attribute data of the opened window as the first window attribute data.

Optionally, the operation of taking out the second window attribute data of the opened window as the first window attribute data may comprise:
obtaining a window identifier of the opened window, determining a window object of the opened window according to the window identifier, and obtaining the second window attribute data recorded in the window object; and
configuring the second window attribute data as the first window attribute data.

Optionally, the operation of obtaining the first window attribute data corresponding to the Activity to be started may comprise:
determining that a new window is used when the Activity to be started is started; and
setting third window attribute data of the new window as the first window attribute data.

Optionally, the operation of setting the third window attribute data of the new window as the first window attribute data may comprise:
assigning a window identifier to the new window, generating a window object corresponding to the new window, recording the assigned window identifier in the window object, and setting the third window attribute data of the new window; and
configuring the third window attribute data as the first window attribute data.

Optionally, the method may further comprise: modifying the window displayed after the Activity is started.

Optionally, the method may further comprise: setting Activities required to be displayed among Activities associated with the Activity to be visible; or closing the Activities associated with the Activity.

At another aspect, an embodiment of the disclosure provides a window displaying method of a mobile terminal, which includes:
determining whether a starting mode of an Activity is a window mode or not when the Activity is started; and
after determining that the starting mode of the Activity is the window mode, setting first window attribute data in a message transfer object for starting the Activity to enable the Activity to display a window according to the first window attribute data.

Optionally, after determining that the starting mode of the Activity is the window mode and before setting the first window attribute data in the message transfer object for starting the Activity, the method may further comprise:
if it is determined that an opened window is used when the Activity is started, determining a window identifier corresponding to the opened window, determining a window object corresponding to the opened window according to the determined window identifier, and obtaining second window attribute data recorded in the determined window object, wherein one window corresponds to one window identifier and one window identifier corresponds to one window object.

Optionally, the operation of setting the first window attribute data in the message transfer object for starting the Activity may comprise:
setting the first window attribute data in the message transfer object for starting the Activity according to the obtained second window attribute data.

Optionally, after determining that the starting mode of the Activity is the window mode and before setting the first window attribute data in the message transfer object for starting the Activity, the method may further comprise:
if it is determined that a new window will be opened when the Activity is started, assigning a window identifier to the new window to be opened, generating a window object corresponding to the new window, recording the assigned window identifier in the generated window object, and setting second window attribute data in the generated window object, wherein one window corresponds to one window identifier and one window identifier corresponds to one window object.

Optionally, the operation of setting the first window attribute data in the message transfer object for starting the Activity may comprise:
setting the first window attribute data in the message transfer object for starting the Activity according to the second window attribute data in the generated window object.

Optionally, after determining whether the opened window is used or not when the Activity is started, the method may further comprise: setting the window identifier in the message transfer object for starting the Activity to enable the Activity to record the window identifier.

Optionally, the method may further comprise: when the Activity is required to be closed and the Activity to be closed is started in the window mode, judging whether Activities associated with the Activity to be closed exist or not; if the Activities associated with the Activity to be closed do not exist, deleting associated window objects of the Activity to be closed after closing the Activity to be closed,

Optionally, the Activities associated with the Activity to be closed may comprise: other Activities recording window identifiers identical to the window identifier recorded by the Activity to be closed among opened Activities; and the associated window objects of the Activity to be closed may comprise: window objects recording window identifiers identical to the window identifier recorded by the Activity to be closed.

Optionally, after judging whether the Activities associated with the Activity to be closed exist or not, the method may further comprise:
if the Activities associated with the Activity to be closed exist and the Activity to be closed is an Activity which is being displayed, setting Activities required to be displayed among the Activities associated with the Activity to be closed to be visible after closing the Activity to be closed.

Optionally, after determining whether the opened window is used or not when the Activity is started, the method may further comprise: setting the window identifier in the message transfer object for starting the Activity to enable the Activity to record the window identifier.

Optionally, the method may further comprise: receiving a window modification command, and obtaining a command type, a window attribute parameter and a window identifier in the command; determining Activities required to be displayed in a window required to be modified among Activities recording the obtained window identifier; and sending the obtained command type and window attribute parameter to each of the determined Activities required to be displayed to enable each Activity to display the window according to the command type and the window attribute parameter.

Optionally, after obtaining the command type, the window attribute parameter and the window identifier in the command, the method may further comprise: modifying second window attribute data recorded in a specific window object according to the obtained command type and window attribute parameter, where the specific window object may comprise: a window object recording the obtained window identifier.

At another aspect, an embodiment of the disclosure provides a mobile terminal, which performs the method according to any one of the embodiments described above.

### Brief Description of the Drawings

Fig. 1 is a schematic diagram of an Activity queue *historyRecord* in the related art;
Figs. 2 and 3 are flow schematic diagrams of window displaying methods of a mobile terminal according to some embodiments;
Fig. 4 is a schematic diagram of corresponding relations between windows and Activities in some embodiments;
Fig. 5 is a flow schematic diagram of a first example;
Fig. 6 is a flow schematic diagram of a second example;
Fig. 7 is a flow schematic diagram of a third example;
Fig. 8 is a flow schematic diagram of a fourth example;
Fig. 9 is a flow schematic diagram of a fifth example;
Fig. 10 is a flow schematic diagram of a sixth example;
Fig. 11 is a schematic diagram of window layouts in some embodiments; and
Fig. 12 is a schematic diagram of a structure of a mobile terminal according to some embodiments.

### Detailed Description of the Embodiments

Some embodiments of the disclosure are described below to illustrate some solutions of the disclosure, but these embodiments are only one part of embodiments of the disclosure and not all of the embodiments. The protection scope of the disclosure should not be limited by the contents of these embodiments.

In some embodiments of the disclosure, a window displaying method of a mobile terminal based on the Android platform is taken as an example for illustration, but it does not mean that the method is only applicable to the Android platform. Actually, various mobile terminals based on other platforms may adopt the same or similar window displaying method.

As shown in Fig. 2, the window displaying method of the mobile terminal may comprise the following operations:

Operation S201: determining that a starting mode of an Activity to be started is a window mode.

Before the window is displayed, the starting mode of the Activity to be started (i.e., the display mode of the Activity to be started), such as a full-screen mode or a window mode, is firstly determined. If it is determined that the starting mode of the Activity is the full-screen mode, the corresponding solution may be adopted to start the Activity to thereby display the Activity in the full-screen mode; and if it is determined that the starting mode of the Activity is the window mode, the following operation (such as operation S202) may be adopted to start the Activity to thereby display the Activity in the window mode.

In this case, the starting mode of the Activity may be determined according to a window identifier corresponding to the Activity. For example, window identifiers may be set, where some types of window identifiers correspond to the full-screen mode, and some types of window identifiers correspond to the window mode. For example, the window identifier may be selected from 0, 1, 2, 3, 4..., where the window identifier being zero represents that the starting mode of the Activity is the full-screen mode, and the window identifier being non-zero represents that the starting mode of the Activity is the window mode. In addition, the window identifiers may also be represented in other ways, such as numbers, symbols, graphs and the like.

Operation S202: obtaining first window attribute data corresponding to the Activity to be started to display the Activity to be started according to the first window attribute data.

In this case, the window attribute data *winData* may comprise data relevant to the window position and the window size. For example, the window attribute data *winData* may comprise the window width (*multiwinWidth*), the window height (*multiwinHeight*), the left position of the window position (*multiwinLeft*), the top position of the window position (*multiwinTop*) and whether to maximize or not (*multiwinMaximize*), where whether to maximize or not means whether to maximize the window or not (as shown in Table 1).

**Table 1. Window Attribute Data winData**

| Attribute Value | Attribute Name | Value Type |
|---|---|---|
| Left position of window position | *multiwinLeft* | Integer (Int) |
| Top position of window position | *multiwinTop* | Int |
| Window width | *multiwinWidth* | Int |
| Window height | *multiwinHeight* | Int |
| Whether to maximize or not | *multiwinMaximize* | Boolean |

After the first window attribute data of the Activity to be started is obtained, the Activity may be started according to the first window attribute data.

Optionally, in the operation S202, a variety of modes may be adopted to obtain the first window attribute data of the Activity to be started:

For example, if an opened window is used when the Activity to be started is started, the window attribute data of the opened window may be taken out as the first window attribute data of the Activity to be started. In some examples, multiple Activities may be started in one application program, and the multiple Activities in the application program may have the same window attribute data; and after the first Activity is started, if the second Activity is the Activity to be started, the window attribute data of the first Activity may be taken out as the window attribute data of the second Activity (the Activity to be started). In addition, this mode is also applicable to the situation that Activities in two or more application programs adopt the same window attribute data.

For another example, if a new window is used when the Activity to be started is started, the window attribute data of the new window may be set as the window attribute data of the Activity to be started. In some examples, one application program is started, and this application program adopts window attribute data which is different from that of the application program opened previously for display (or this application program is the one which is firstly started after the mobile terminal is booted up). The window attribute data of the Activity corresponding to this application program when started may be set at first. In addition, this mode is also applicable to the situation that different Activities in one application program adopt different window attribute data for display.

It needs to be noted that in the situation that the opened window is used when the Activity to be started is started, before the first window attribute data of the Activity to be started is obtained, the following operations may further be performed:

Firstly, obtaining the window identifier of the opened window, where the window identifier is used for identifying the starting mode (such as the full-screen mode or the window mode) of the opened window; and

Secondly, determining the window attribute data of the opened window according to the window identifier, where the window attribute data may comprise data relevant to the window position and the window size of the opened window, and the window identifier and the window attribute data may be saved in a window object.

In addition, the operation of obtaining the window identifier of the opened window and the operation of determining the window attribute data of the opened window according to the window identifier may also be performed simultaneously.

It needs to be noted that in the situation that the new window is used when the Activity to be started is started, before the first window attribute data of the Activity to be started is obtained, the following operations may further be performed:
Operation (1): assigning a window identifier to the new window to be opened or setting a window identifier for the new window to be opened; and
Operation (2): assigning window attribute data to the new window to be opened or setting window attribute data for the new window to be opened.

In addition, the operation (1) and the operation (2) may also be performed simultaneously; or the operation (2) is firstly performed and then the operation (1) is performed.

In addition, in some embodiments, the window which is displayed after the Activity is started may be modified. For example, the window which is displayed after the Activity is started may be modified according to a window modification command, where the window modification command may comprise one or more of the command type, the window attribute parameter, the window identifier and the like, and of course, the window modification command may also comprise other items.

One or more of the window position, the window size, the maximization of the window, the restoration of the window, the closing of the window, the hiding of the window, the switching of the focus window and the like may be modified according to the window modification command, where the focus window is a window which is being operated by the user.

In some embodiments, the started Activity may further be closed. In addition, after a certain started Activity is closed, Activities associated with the Activity may further be operated; for example, Activities required to be displayed among the Activities associated with the Activity are set to be visible; or the Activities associated with the Activity are closed.

Some embodiments provide a window displaying method of a mobile terminal, which includes: determining whether a starting mode of an Activity is a window mode or not when the Activity is started; and after determining that the starting mode of the Activity is the window mode, setting first window attribute data for starting the Activity to enable the Activity to display a window according to the first window attribute data.

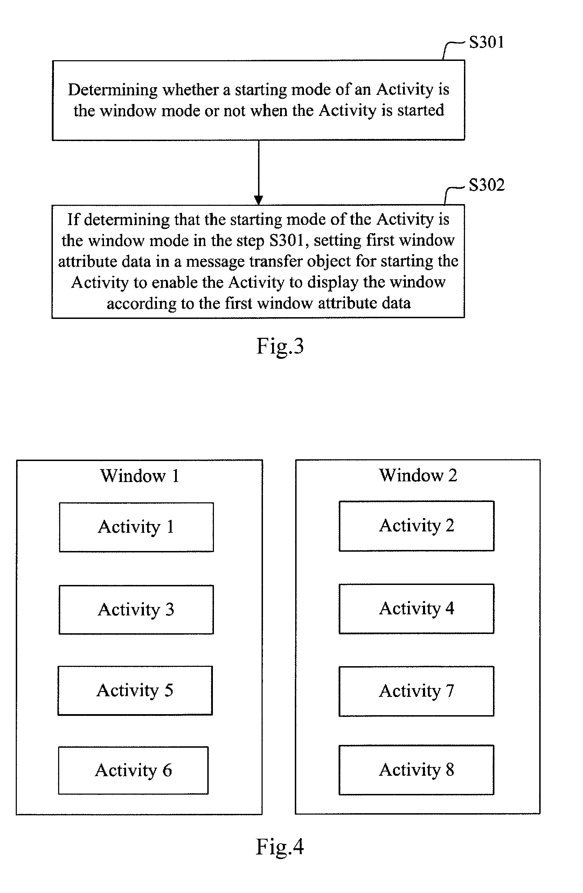

As shown in Fig. 3, in some embodiments, a window displaying method of a mobile terminal comprises:
Operation S301: determining whether a starting mode of an Activity is the window mode or not when the Activity is started.

Optionally, the starting mode of the Activity may be determined according to the window identifier *winId*. For example, if the window identifier *winId* exists, the starting mode of the corresponding Activity is the window mode; otherwise, the starting mode of the corresponding Activity is the full-screen mode. Alternatively, if the window identifier *winId* is a positive integer, the starting mode of the corresponding Activity is the window mode; otherwise, the starting mode of the corresponding Activity is the full-screen mode. Alternatively, if the window identifier *winId* is a certain symbol, the starting mode of the corresponding Activity is the window mode; otherwise, the starting mode of the corresponding Activity is the full-screen mode.

Operation S302: if determining that the starting mode of the Activity is the window mode in the operation S301, setting first window attribute data (*winData1*) for starting the Activity to enable the Activity to display the window according to the first window attribute data *winData1*.

In this case, the first window attribute data *winData1* may comprise data relevant to the window position and the window size corresponding to the Activity. For example, the window attribute data *winData1* may comprise the window width (*multiwinWidth1*), the window height (*multiwinHeight1*), the left position of the window position (*multiwinLeft1*), the top position of the window position (*multiwinTop1*) and whether to maximize or not (*multiwinMaximize1*), where whether to maximize or not means whether to maximize the window or not (as shown in Table 2).

**Table 2. First Window Attribute Data winData1**

| Attribute Value | Attribute Name | Value Type |
|---|---|---|
| Left position of window position | *multiwinLeft1* | Integer (Int) |
| Top position of window position | *multiwintop1* | Int |
| Window width | *multiwinWidth1* | Int |
| Window height | *multiwinHeight1* | Int |
| Whether to maximize or not | *multiwinMaximize1* | Boolean |

It needs to be noted that the first window attribute data *winData1* is not limited to those listed in the Table 2, as long as the Activity may determine the starting mode for starting according to the data. For example, the first window attribute data *winData1* may comprise the left position of the window position, the right position of the window position, the top position of the window position and the bottom position of the window position, and the window position and the window size may be determined through the data.

Optionally, if it is determined that the starting mode of the Activity is the window mode in the operation S301, after the operation S301 and before the operation S302, the method may further comprise:

If it is determined that a new window is opened when the Activity is started, a window identifier *winld* is required to be assigned to the new window to be opened, a window object (*multiWinInfo*) corresponding to the new window may further be generated, the assigned window identifier *winId* is recorded in the generated window object *multiWinInfo,* and second window attribute data (*winData2*) in the generated window object *multiWinInfo* is set, where one window corresponds to one window identifier *winId*, and one window identifier *winId* corresponds to one window object *multiWinInfo*; and the first window attribute data *winData1* for starting the Activity may be set according to the window attribute data *winData2* in the generated window object *multiWinInfo*.

Optionally, for example, if the window identifier *winId* = -1, the new window is required to be opened; and if the window identifier *winId* is not equal to -1 or 0, the opened window is used.

In this case, the second window attribute data *winData2* may comprise data relevant to the window position and the window size, as well as whether to hide or not (*multiwinHide*) and whether to maximize or not (*multiwinMaximize*), where for the data relevant to the window position and the window size, the reference may be made to the definition of the first window attribute data *winData1*. Whether to hide or not means whether to hide the window or not; and whether to maximize or not means whether to maximize the window or not.

An optional example of the second window attribute data *winData2* is as shown in Table 3.

**Table 3. Second Window Attribute Data winData2**

| Attribute Value | Attribute Name | Value Type |
|---|---|---|
| Left position of window position | *multiwinLeft* | Int |
| Top position of window position | *multiwinTop* | Int |
| Window width | *multiwinWidth* | Int |
| Window height | *multiwinHeight* | Int |
| Whether to hide or not | *multiwinHide* | boolean |
| Whether to maximize or not | *multiwinMaximize* | boolean |
| Whether focus window exists or not | *inFocus* | boolean |

Optionally, the first window attribute data *winData1* for starting the Activity may be set according to the second window attribute data *winData2* recorded in the generated window object. For example, it may be implemented in the following mode:

After the second window attribute data *winData2* in the window object *multiWinInfo* is set, the window width, the window height, the top position of the window position and the bottom position of the window position in the first window attribute data *winData1* for starting the Activity are respectively set to be equal to the respective corresponding attribute data values in the second window attribute data *winData2.*

In order to ensure the one-to-one correspondence between the windows and the window identifiers, optionally a global variable *multiWinId* is set, where when the mobile terminal is booted up, the global variable may be initialized to 1, and when a new window is opened, the global variable *multiWinId* itself adds 1 firstly, and then the window identifier *winId* is set to be equal to the global variable *multiWinld*. In the mode, the window identifiers *winId* of the new windows to be opened are increasing all along, thereby ensuring that the window identifiers *winId* of the different windows are different and the one-to-one correspondence between the windows and the window identifiers *winld* is realized. Since the window identifier *winId* corresponding to the window is recorded in the window object *multiWinInfo*, the one-to-one correspondence between the window objects *multiWinInfo* and the window identifiers *winld* may be ensured. Further, the one-to-one correspondence of the windows, the window identifiers *winld* and the window objects *multiWinInfo* may be ensured.

Optionally, a window object queue *multiWinRecord* may further be established to save the various window objects *multiWinInfo*.

For example, if a new window is opened when the Activity is started, there is a method of establishing a window object and joining into the window queue, which will be described in the following first example.

Optionally, after the operation S301 and before the operation S302, the method further comprises:
If it is determined that an opened window is used when the Activity is started, a window identifier *winId* corresponding to the opened window is determined, a window object *multiWinInfo* corresponding to the opened window is determined according to the determined window identifier *winId*, and window attribute data *winData2* recorded in the determined window object *multiWinInfo* is obtained, where one window corresponds to one window identifier and one window identifier corresponds to one window object.

In this case, setting the first window attribute data *winData1* for starting the Activity in the operation S302 may comprise: setting the first window attribute data *winData1* for starting the Activity according to the obtained second window attribute data *winData2*.

Optionally, if the window object queue *multiWinRecord* is adopted for managing all window objects *multiWinInfo,* the window object *multiWinInfo* in the window object queue *multiWinRecord* is searched according to the obtained window identifier *winId,* and if the window identifier *winId* recorded in the window object *multiWinInfo* is equal to the obtained window identifier *winId*, it is determined that the window object *multiWinInfo* is the window object corresponding to the opened window.

Optionally, the operation of setting the first window attribute data *winData1* according to the obtained second window attribute data *winData2* may be implemented in the following mode:

The window width, the window height, the top position of the window position and the bottom position of the window position in the first window attribute data *winData1* are respectively set to be equal to the respective corresponding attribute data values in the second window attribute data *winData2*.

Specifically, if the opened window is used when the Activity is started, there is a method of searching the window object and setting the window identifier *winId*, which will be described in the following second example.

Optionally, the method may further comprise:
when the Activity is required to be closed and the Activity to be closed is displayed in the window mode, judging whether Activities associated with the Activity to be closed exist or not; and
if the associated Activities do not exist, deleting window objects *multiWinInfo* associated with the Activity to be closed after closing the Activity to be closed.

In this case, the Activities associated with the Activity to be closed include: other Activities recording window identifiers identical to the window identifier recorded by the Activity to be closed; and the window objects associated with the Activity to be closed include: window objects recording window identifiers identical to the window identifier recorded by the Activity to be closed.

Optionally, when the Activity is required to be closed and the Activity is displayed in the full-screen mode, the existing processing method of the mobile terminal may be adopted, which is not described in details here.

Optionally, the window objects *multiWinInfo* associated with the Activity may be deleted in the following mode:
the window objects *multiWinInfo* having the same window identifier *winId* are searched in the window object queue *multiWinRecord* according to the window identifier *winId* recorded in the Activity to be closed; and
the searched window objects *multiWinInfo* are deleted from the window object queue *multiWinRecord.*

In some embodiments, there is a method of deleting the corresponding window objects *multiWinInfo* when the Activity is closed, which will be described in the following third example.

Optionally, if the Activity to be closed is started in the window mode and the Activities associated with the Activity to be closed exist, it is further judged whether the Activity to be closed is an Activity which is being displayed or not; and
if so, after the Activity to be closed is closed, Activities required to be displayed among the Activities associated with the Activity to be closed are set to be visible.

Optionally, it may be determined whether the Activity is the Activity which is being displayed through the data which is recorded in the Activity and used for indicating whether the Activity is visible or not. For example, when Visible = TRUE, it is determined that the Activity is the Activity which is being displayed; otherwise, when Visible = FALSE, it is determined that the Activity is not the Activity which is being displayed.

Optionally, the operation of setting the Activities required to be displayed among the Activities associated with the Activity to be visible comprises:
among these Activities associated with the Activity to be closed, the Visible of the Activity (referred to as "first Activity", the Activity corresponding to the next-layer page close to the top-layer page is referred to as "second Activity" and so forth, and the Activities corresponding to the following respective pages are respectively referred to as "third Activity", "fourth Activity", ...) corresponding to the page at the top layer of the corresponding window is set to TRUE; and if the first Activity has the transparent attribute, the Visible of the second Activity is set to TRUE and so forth until a certain Activity does not have the transparent attribute, and then the Visible of the next Activity is set to FALSE.

Optionally, if the Activity to be closed is the Activity which is being displayed, but the corresponding page is not the page at the top layer among all the pages of the window corresponding to the Activity, Activities required to be displayed among the Activities behind the Activity may be set to be visible.

Optionally, if the Activity to be closed is displayed in the window mode and the Activities associated with the Activity to be closed exist, but the Activity to be closed is not the Activity which is being displayed, it is determined whether the upper-layer Activity of the Activity to be closed is being displayed or not, and if the upper-layer Activity is being displayed and the upper-layer Activity has the transparent attribute, the lower-layer Activity of the Activity to be closed is required to be set to be visible, and if the lower-layer Activity has the transparent attribute, the judgment may be continuously performed layer by layer, and it may be judged whether other Activities of the window are required to be set to be visible or not according to the following principle:

If the current-layer Activity is visible and has the transparent attribute, the lower layer is visible.

Specifically, there is a method of setting the Activities required to be displayed among the Activities associated with the Activity to be closed after the Activity is closed, which will be described in the following fourth example.

Optionally, in some embodiments, the method may further comprise the operations of modifying the window:
receiving a window modification command, and obtaining the command type, the window attribute parameter and the window identifier in the window modification command;
determining Activities required to be displayed in the window required to be modified among the Activities recording the obtained window identifier; and
sending the obtained command type and the window attribute parameter to each of the determined Activities required to be displayed to enable each Activity to display the window according to the command type and the window attribute parameter.

In this case, for the method of determining the Activities required to be displayed in the window, the reference may be made to the above relevant description. If there are other Activities in addition to the Activities required to be displayed in the window required to be modified, optionally the window attribute parameter of the window may be further sent to the Activities when the Activities are required to be displayed to enable the Activities to display the window according to the received window attribute parameter.

Alternatively, after the window modification command is received, and the command type, the window attribute parameter and the window identifier in the command are obtained, Activities in the window required to be modified are determined according to the obtained window identifier, the obtained command type and window attribute parameter are sent to each Activity, so that Activities required to be displayed display the window according to the command type and the window attribute parameter, and Activities not required to be displayed record the received window attribute parameter and display the window according to the recorded window attribute parameter when they are required to be displayed.

Table 4 lists some window operation commands, which may comprise the window modification command and other window operation commands, where the command type may comprise: window position move command (*MULTIWIN_CONTROL_MOVE*), window size change command (*MULTIWIN_CONTROL CHANGE*), window position move and window size change command (*MULTIWIN_CONTROL_MOVE AND CHANGE*), window maximization/window restoration command (*MULTIWIN_CONTROL_MAXIMIZE*) and the like. In addition, the command types of other window operation commands may further comprise: window close command (*MULTIWIN CONTROL_CLOSE*), window hide/restoration command (*MULTIWIN_CONTROL_HIDE*), command for switching focus window of windows (*MULTIWIN_CONTROL_FOCUS*) and the like.

In this case, after the window modification command is received, the command type and the window attribute parameter may be sent to the Activity to enable the Activity to display the window according to the command type and the window attribute parameter; and for the other window operation commands, the command type and the window attribute parameter are not required to be sent to the Activity but the window is operated in other modes, and the specific operation mode will be described below in details.

Optionally, after the window operation command is received, the second window attribute data *winData2* recorded in the corresponding window object may be modified according to the obtained command type and window attribute parameter, so that when other Activities in the window are started, the first window attribute data *winData1* for starting the other Activities may be modified according to the modified *winData2* to enable the other Activities to display the window according to the first window attribute data *winData1.*

For example, the various window operation commands may comprise four window attribute parameters p1, p2, p3 and p4. For the different types of window operation commands, the meanings and values of these window attribute parameters may be different.

Optionally, the window identifier *winId* may be carried in the window operation command, so that after the window operation command is received, the window required to be operated may be determined according to the window identifier *winId* in the window operation command.

**Table 4. Window Operation Commands**

| Command type cmd | Type meaning | Parameter | Whether to modify *winData2* or not | Whether to send to Activity or not |
|---|---|---|---|---|
| *MULTIWIN_CONTROL_MOVE* | Move window position | p1 (left position of window) | Modify window position in *winData2* | Yes |
| | | P2 (top position of window) | | |
| *MULTIWIN_CONTROL_CHANGE* | Change window size | p3 (window width) | Modify window size in *winData2* | Yes |
| | | p4 (window height) | | |
| *MULTIWIN_CONTROL_MOVE AND CHANGE* | Move window position and change window size | p1 (left position of window) | Modify data relevant to window position and window size in *winData2* | Yes |
| | | P2 (top position of window) | | |
| | | p3 (window width) | | |
| | | p4 (window height) | | |
| *MULTIWIN_CONTROL_CLOSE* | Close window | p1, p2, p3 and p4 are all equal to 0 | No | No |
| *MULTIWIN_CONTROL_HIDE* | Hide/restore window | p1=0 represents window restoration, p1=1 represents window hiding, p2, p3 and p4 are all equal to 0 | Modify *multiWinHide* in *winData2,* if p1=1, then *multiWinHide=* TRUE; and if p1=0, then *multiWinHide=* FALSE | No |
| *MULTIWIN_CONTROL_MAXIMIZE* | Maximize/ restore window | p1=0 represents the restoration of the original size of the window, p1=1 represents the maximization of the window, p2, p3 and p4 are all equal to 0 | Modify *multiwinMaximize* in *winData2,* if p1=1, then *multiwinMaximize=* TRUE; and if p1=0, then *multiwinMaximize=* FALSE | Modify *multiwinMaximize* in *winData1,* if p1=1, then *multiwinMaximize* =TRUE; and if p1=0, then *multiwinMaximize* =FALSE |
| *MULTIWIN_CONTROL_ FOCUS* | Switch focus window | p1, p2, p3 and p4 are all equal to 0 | Set *inFocus* in *winData2* to TRUE | No |

The processing method of receiving the window modification command will be described in the following fifth example.

When the window operation command is the window close command (*MULTIWIN_CONTROL_CLOSE*), the Activity corresponding to the window is closed (where the window to be closed and the Activity corresponding to the window may be determined according to the window identifier *winId* in the window operation command), and the window object *multiWinInfo* corresponding to the window is deleted ( where the window object to be deleted may be determined according to the window identifier *winId* in the window operation command).

When the window operation command is the window hide/restoration command (*MULTIWIN_CONTROL_HIDE*), if the window is hidden, the window is placed below the desktop (the page corresponding to launcher), and if the window is restored, the window is placed on the desktop. Specifically, when the window is hidden, the pages corresponding to the respective Activities of the window are placed below the desktop, and optionally, the search may be performed from bottom to top in the Activity queue *historyRecord* for managing the respective Activities, Activities which are not displayed are processed preferentially, and if the search is performed from the top to the bottom, after the Activity at the top is processed, Activities below the Activity are firstly displayed and then processed.

When the window operation command is the focus window switching command (*MULTIWIN_CONTROL_FOCUS*), the state of the Activity corresponding to the page at the top layer of the operated window is converted to the activated state. If the state of the Activity has already been the activated state, the window operation command is ignored. The processing method of switching the focus window will be described in the sixth example. The focus window refers to the currently operated window. There may be a plurality of windows which are opened simultaneously, but only one window is the currently operated window.

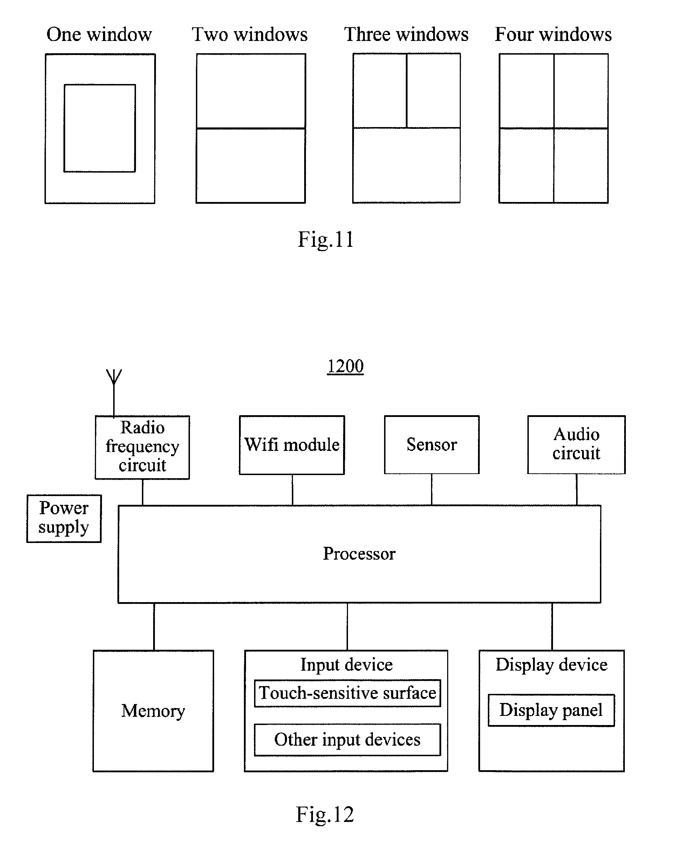

When one Activity is started and the window is opened, if the operation command specifying the window size is received from a user, the window is displayed according to the specified size. If the window size is not specified, the window is displayed according to a default processing method. The optional processing methods comprise: if there is no window at present, the new window occupies one half of the screen and is positioned at the center; if there has been one window at present, the two windows occupy one half of the screen respectively, with one at the top and one at the bottom; if there have been two windows at present, the first two windows of the three windows occupy one half of the upper-half screen respectively, and the new window occupies the lower-half screen; and if there have been four windows at present, the four windows occupy one quarter of the screen respectively, and the display effects of one to four windows are as shown in Fig. 11. In addition, if there are more than five windows in total, the windows are arranged from the upper left corner to the lower right corner and staggered at certain positions, and the sizes of the windows are the same. However, Fig. 11 only shows an example, and a plurality of windows may also be arranged in other modes.

Optionally, when two and more windows exist simultaneously, the sizes of the windows may be changed by moving the boundary of the two windows, and when one window becomes large, the windows beside the window will be adjusted correspondingly, and in a word, the several windows will occupy the full screen. When one window is pressed for long, a system action bar will appear on the screen, which provides function buttons of closing, maximizing, minimizing and position switching. One window is pressed for long, then the other window is pressed for long, and the positions of the two windows will be switched by pressing a switching button.

### First example: Method of starting an Activity and establishing a new window for display:

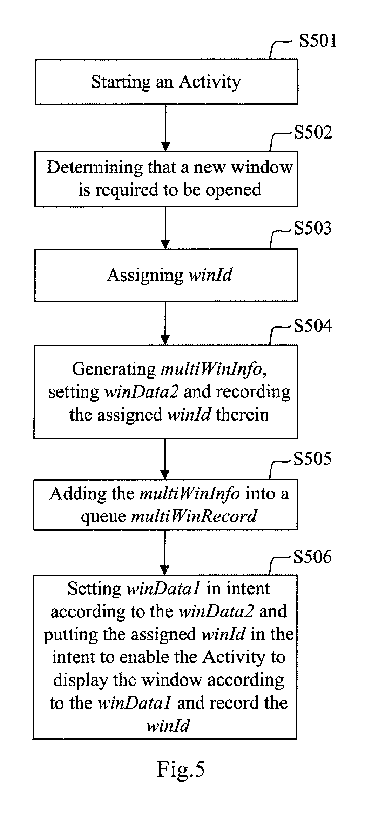

As shown in Fig. 5, the method in the first example may comprise the following operations:
Operation S501: determining an Activity to be started;
Operation S502: determining that a new window is required to be opened when the Activity is started;
Operation S503: assigning a window identifier *winId* to the new window;
Operation S504: generating a window object *multiWinInfo,* setting second window attribute data *winData2* in the window object *multiWinInfo,* and recording the assigned *winId* in the window object *multiWinInfo;*
Operation S505: adding the generated window object *multiWinInfo* into a window object queue *multiWinRecord;* and
Operation S506: setting first window attribute data *winData1* for starting the Activity according to the second window attribute data *winData2* to enable the Activity to display the window according to the first window attribute data *winData1* and record the window identifier *winId*.

### Second example: Method of starting an Activity and establishing a new window:

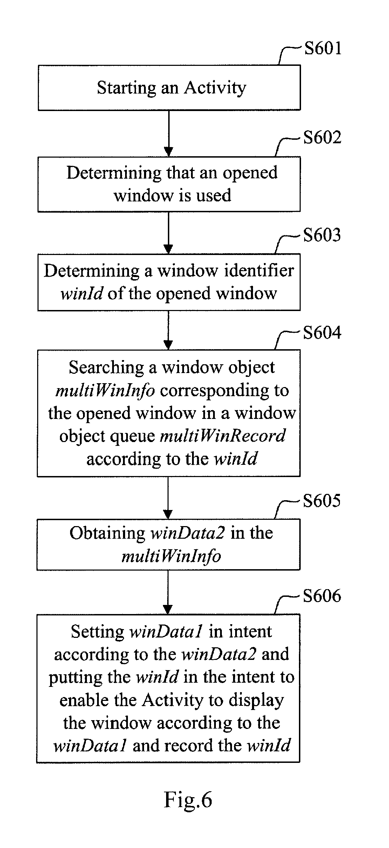

As shown in Fig. 6, the method in the second example may comprise the following operations:
Operation S601: determining an Activity to be started;
Operation S602: determining that an opened window is used when the Activity is started;
Operation S603: determining a window identifier *winId* of the opened window;
Operation S604: searching a window object *multiWinInfo* corresponding to the opened window in a window object queue *multiWinRecord* according to the determined window identifier *winId;*
Operation S605: obtaining second window attribute data *winData2* in the searched window object *multiWinInfo;* and
Operation S606: setting first window attribute data *winData1* for starting the Activity according to the obtained second window attribute data *winData2* to enable the Activity to display the window according to the first window attribute data *winData1* and record the window identifier *winId.*

### Third example: Method of closing an Activity and deleting a corresponding window object:

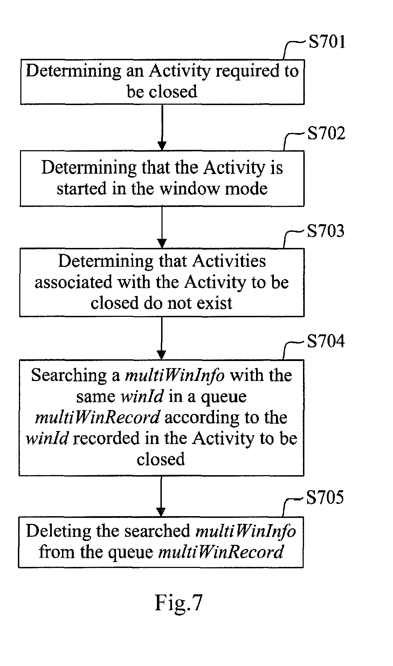

As shown in Fig. 7, the method in the third example may comprise the following operations:
Operation S701: determining an Activity required to be closed;
Operation S702: determining that the Activity to be closed is started in the window mode;
Operation S703: determining that Activities associated with the Activity to be closed do not exist;
Operation S704: searching a window object *multiWinInfo* with the same window identifier *winId* in a window object queue *multiWinRecord* according to the window identifier *winId* recorded in the Activity to be closed; and
Operation S705: deleting the searched window object *multiWinInfo* from the window object queue *multiWinRecord.*

### Fourth example: Method of setting Activities required to be displayed among Activities associated with the Activity to be visible after the Activity is closed:

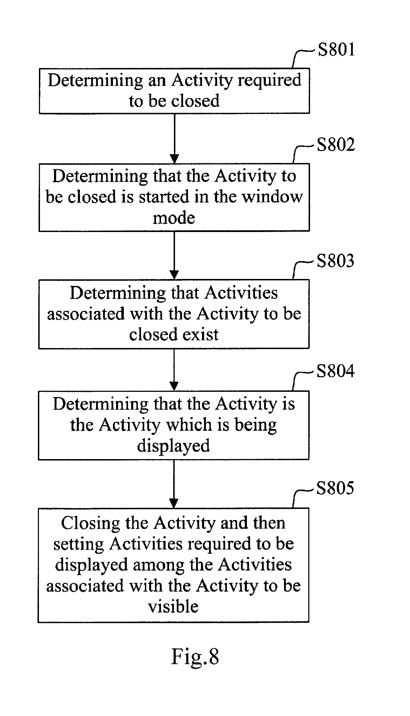

As shown in Fig. 8, the method in the fourth example may comprise the following operations:
Operation S801: determining an Activity to be closed;
Operation S802: determining that the Activity to be closed is started in the window mode;
Operation S803: determining that Activities associated with the Activity to be closed exist;
Operation S804: determining that the Activity to be closed is the Activity which is being displayed; and
Operation S805: closing the Activity and setting Activities required to be displayed among the Activities associated with the Activity to be visible.

With the method in the fourth example, in at least one aspect, a plurality of windows may be displayed independently at the same time without mutual interference. For example, as shown in Fig. 4, two windows exist at the same time, where when the Activity in one window is closed, only the display of this window is affected, and the display of the other window is not affected. The position order of the Activities in the Activity queue *historyRecord* in Fig. 4 is based on the serial numbers behind the Activities, that is, Activity 1 ranks first in the Activity queue *historyRecord,* followed by Activity 2 to Activity 8 in sequence. With the method in the fourth example, when Activity 1 is closed, the page corresponding to Activity 3 may be displayed in window 1, that is, the respective windows may be displayed independently without mutual interference.

### Fifth example: Processing method of a window modification command:

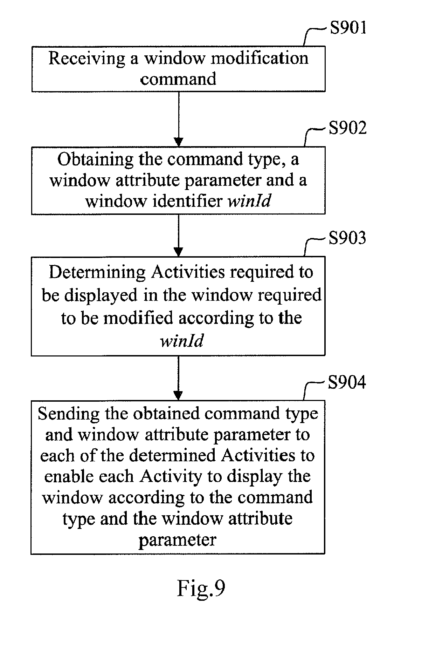

As shown in Fig. 9, the method in the fifth example may comprise the following operations:
Operation S901: receiving a window modification command;
Operation S902: obtaining the command type, a window attribute parameter and a window identifier *winId;*
Operation S903: determining Activities required to be displayed in the window required to be modified according to the obtained window identifier *winId;* and
Operation S904: sending the obtained command type and window attribute parameter to each of the Activities determined in the operation S903 to enable these Activities to display the window according to the command type and the window attribute parameter.

### Sixth example: Method of switching a focus window:

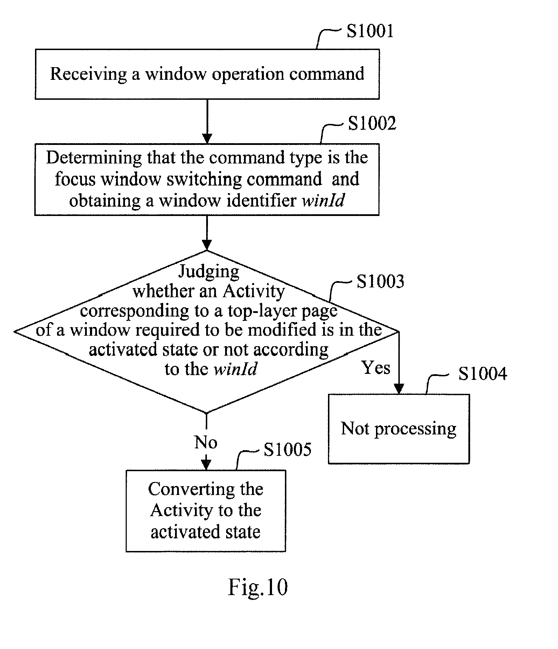

As shown in Fig. 10, the method in the sixth example may comprise the following operations:
Operation S1001: receiving a window operation command;
Operation S1002: determining that the command type is the focus window switching command and obtaining a window identifier *winId;*
Operation S1003: judging whether an Activity corresponding to a top-layer page of a window required to be modified is in the activated state or not according to the window identifier *winId;* if so, performing operation S1004; otherwise, performing operation S1005;
Operation S1004: not processing; and
Operation S1005: converting the Activity to the activated state.

Fig. 12 shows a schematic diagram of a structure of a mobile terminal. The mobile terminal 1200 may perform the methods according to the embodiments described above. The mobile terminal 1200 may be various handheld devices (such as mobile phones, tablet computers, PDAs and the like) and may comprise a processor including one or more processing cores, a radio frequency circuit, a memory comprising one or more computer-readable storage media, an input device, a display component, a sensor, an audio circuit, a WiFi module, a power supply and other components. Those skilled in the art may understand that the structure of the mobile terminal 1200 in the embodiment does not limit the disclosure, and more or fewer components may be included, or some components may be combined, or different arrangements of the components may be used.

The radio frequency circuit may be used for receiving and transmitting signals in the process of receiving and transmitting information or in the communication process. Particularly, after receiving downlink information from the base station, the radio frequency circuit sends the downlink information to one or more processors for processing; and in addition, the radio frequency circuit sends uplink data to the base station. Generally, the radio frequency circuit includes, but is not limited to, an antenna, at least one amplifier, a tuner, one or more oscillators, a subscriber identity module (SIM) card, a transceiver, a coupler, an LNA (Low Noise Amplifier), a diplexer and the like. In addition, the radio frequency circuit may also communicate with a network and other devices through wireless communications. The wireless communications may use any communication standard or protocol, including but not limited to GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service) and the like.

The memory may be used for storing software programs and modules, and the processor may run the software programs and the modules stored in the memory to thereby implement various functional applications and data processing. The memory may mainly comprise a program storage area and a data storage area, where the program storage area may store an operating system, at least one application program required by functions (such as the sound playing function, the image playing function and the like) and the like; and the data storage area may store data (such as audio data, a phonebook and the like) created according to the use of the mobile terminal 1200 and the like. In addition, the memory may include a high-speed random access memory and may also include a nonvolatile memory, such as at least one magnetic disk storage device, a flash memory device or other volatile solid-state storage devices. Correspondingly, the memory may also include a memory controller used to provide access of the processor and the input device to the memory.

The input device may be used for receiving input digital or character information and producing signal input of a keyboard, a mouse, an operating rod and an optical or track ball, which are related to user settings and function control. Optionally, the input device may comprise a touch-sensitive surface and other input devices. The touch-sensitive surface, also known as a touch display screen or a touchpad, may collect user's touch operations on or nearby the touch-sensitive surface (for example, operations performed by the user through using the finger, a touch pen and any other suitable object or accessory on or nearby the touch-sensitive surface) and drive a corresponding connection device according to a preset program. Optionally, the touch-sensitive surface may comprise two parts, namely a touch detection device and a touch controller, where the touch detection device is used for detecting touch orientations of the user, detecting signals produced by touch operations and transmitting the signals to the touch controller; and the touch controller is used for receiving touch information from the touch detection device, converting the touch information to touch point coordinates and further sending the coordinates to the processor, and may also receive a command sent from the processor and implement the command. In addition, the touch-sensitive surface may be implemented in a variety of types, such as resistance type, capacitance type, infrared type, surface acoustic wave and the like. In addition to the touch-sensitive surface, the input device may further comprise other input devices. Specifically, other input devices may include but not limited to one or more of a physical keyboard, function keys (such as a volume control key, a switch key and the like), a track ball, a mouse, an operating rod and the like.

The display component may be used for displaying the information input by the user or the information provided to the user, as well as various graphical user interfaces of the mobile terminal 1200, where the graphical user interfaces may be constituted by graphs, texts, icons, videos and any combinations thereof. The display component may include a display panel. Optionally, the display panel may be configured by adopting an LCD (Liquid Crystal Display), an OLED (Organic Light-Emitting Diode) and other forms. Further, the touch-sensitive surface may cover the display panel. After the touch-sensitive surface detects the touch operation on or nearby the same, it transmits the touch operation to the processor for determining the type of the touch event, and then the processor provides corresponding visual output on the display panel according to the type of the touch event. In the embodiment, the touch-sensitive surface and the display panel are taken as two independent components for realizing input and output functions, but in some embodiments, the touch-sensitive surface and the display panel may be integrated for realizing the input and output functions.

The mobile terminal 1200 may further include at least one sensor, such as a light sensor, a motion sensor and other sensors. Specifically, the light sensor may comprise an ambient light sensor and a proximity sensor, where the ambient light sensor may regulate the brightness of the display panel according to the brightness of the ambient light, and the proximity sensor may close the display panel and/or backlight when the mobile terminal 1200 moves to an ear. As one of the motion sensors, a gravity acceleration sensor may detect the magnitudes of the accelerated speeds in various directions (generally triaxial), detect the magnitude and the direction of the gravity when being static, and be used for identifying the application of the attitude of the mobile phone (such as, horizontal and vertical screen switching operation, related games and attitude calibration of a magnetometer), and identifying related functions in vibration (such as a pedometer and percussion) and the like. The mobile terminal 1200 may further be equipped with a gyroscope, a barometer, a hygrometer, a thermometer, an infrared sensor and other sensors, which are not repeated here.

The audio circuit, a speaker and a microphone may provide an audio interface between the user and the mobile terminal 1200. The audio circuit may convert the received audio data to electrical signals and then transmit the electrical signals to the speaker, and the speaker converts the electrical signals to sound signals for output; and on the other hand, the microphone converts the collected sound signals to electrical signals, the electrical signals are received and then converted to the audio data by the audio circuit, and then the audio data is output to the processor for processing and sent to another device via the radio frequency circuit, or the audio data is output to the memory to facilitate the further processing. The audio circuit may further comprise an earplug jack to provide communications between a peripheral earphone and the mobile terminal 1200.

WiFi belongs to a short-range wireless transmission technology, and the mobile terminal 1200 may help the user to receive and send e-mails, browse web pages, access streaming media and the like, and provide wireless broadband Internet access for the user through the WiFi module. Although the WiFi module is provided in the embodiment, it may be understood that the WiFi module does not belong to the necessary constitution component of the mobile terminal 1200, and may be omitted as needed in the range of not changing the essence of the disclosure.

The processor is a control part of the mobile terminal 1200, connects with respective parts via various interfaces and circuits, runs or implements the software programs and/or the modules stored in the memory, invokes the data stored in the memory and implements the various functions and the processing data of the mobile terminal 1200, to thereby monitor the mobile phone in overall. Optionally, the processor may include one or more processing cores; and optionally, the processor may include an application processor and a modulation and demodulation processor, where the application processor is mainly used for processing the operating system, user interfaces, application programs and the like, and the modulation and demodulation processor is mainly used for processing wireless communications. It may be understood that the modulation and demodulation processor may not be integrated into the processor.

The mobile terminal 1200 further includes a power supply (such as a battery) for supplying power to the various components. Preferably, the power supply may be in logic connection with the processor through a power supply management system, thereby realizing functions of charging and discharging, power consumption management and other functions through the power supply management system. The power supply may further include one or more direct current or alternating current power supplies, a recharging system, a power failure detection circuit, a power converter or inverter, a power status indicator and any other components.

Although not shown, the mobile terminal 1200 may further include a camera, a bluetooth module and the like, which are not repeated here. In an embodiment, the display component of the mobile terminal 1200 is a touch screen display, and the mobile terminal 1200 further includes the memory and one or more programs, where the one or more programs are stored in the memory and configured to be executed by one or more processors. The above one or more programs contain the commands for performing the following operations to implement the window displaying method of the mobile terminal as described above.

In addition, a computer-readable storage medium may further be included, where the computer-readable storage medium may be the computer-readable storage medium contained in the memory in the embodiment, or may be the computer-readable storage medium which exists alone and is not assembled into the terminal. The computer-readable storage medium stores one or more programs (in some embodiments, the computer-readable storage medium may be one or more magnetic disc storage devices, a flash memory device or other non-volatile solid-state storage devices, a CD-ROM, an optical memory and the like), where the one or more programs are executed by one or more processors to implement the window displaying method of the mobile terminal, and the method may include any mode described in the above embodiments.

Those skilled in the art shall appreciate that the embodiments of the disclosure may be embodied as a method, a system or a computer program product. Therefore the disclosure may be embodied in the form of an all-hardware embodiment, an all-software embodiment or an embodiment of software and hardware in combination. Furthermore, the disclosure may be embodied in the form of a computer program product embodied in one or more computer useable storage mediums (including but not limited to a disk memory, a CD-ROM, an optical memory, etc.) in which computer useable program codes are contained.

The disclosure has been described with reference to flow charts and/or block diagrams of the method, the device (system) and the computer program product according to the embodiments of the disclosure. It shall be appreciated that respective flows and/or blocks in the flow charts and/or the block diagrams and combinations of the flows and/or the blocks in the flow charts and/or the block diagrams may be embodied in computer program instructions. These computer program instructions may be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow charts and/or the block(s) of the block diagrams.

These computer program instructions may also be stored into a computer readable memory capable of directing the computer or the other programmable data processing device to operate in a specific manner so that the instructions stored in the computer readable memory create manufactures including instruction means which perform the functions specified in the flow(s) of the flow charts and/or the block(s) of the block diagrams.

These computer program instructions may also be loaded onto the computer or the other programmable data processing device so that a series of operational operations are performed on the computer or the other programmable data processing device to create a computer implemented process so that the instructions executed on the computer or the other programmable device provide operations for performing the functions specified in the flow(s) of the flow charts and/or the block(s) of the block diagrams.

Although the preferred embodiments of the disclosure have been described, those skilled in the art benefiting from the underlying inventive concept may make additional modifications and variations to these embodiments. Therefore the appended claims are intended to be construed as encompassing the preferred embodiments and all the modifications and variations coming into the scope of the disclosure.

Evidently those skilled in the art may make various modifications and variations to the disclosure without departing from the essence and scope of the disclosure. Thus the disclosure is also intended to encompass these modifications and variations thereto so long as these modifications and variations come into the scope of the claims appended to the disclosure and their equivalents.

## Claims

1. A window displaying method of a mobile terminal, comprising:
determining that a starting mode of an Activity to be started is a window mode (S201); and
obtaining first window attribute data corresponding to the Activity to be started to display the Activity to be started according to the first window attribute data (S202).

2. The method according to claim 1, wherein obtaining the first window attribute data corresponding to the Activity to be started comprises:
determining that an opened window is used when the Activity to be started is started (S601-S602); and
taking out second window attribute data of the opened window as the first window attribute data.

3. The method according to claim 2, wherein taking out the second window attribute data of the opened window as the first window attribute data comprises:
obtaining a window identifier of the opened window, determining a window object of the opened window according to the window identifier, and obtaining the second window attribute data recorded in the window object (S603-S605); and
configuring the second window attribute data as the first window attribute data (S606).

4. The method according to claim 1, wherein obtaining the first window attribute data corresponding to the Activity to be started comprises:
determining that a new window is used when the Activity to be started is started (S501-S502); and
setting third window attribute data of the new window as the first window attribute data.

5. The method according to claim 4, wherein setting the third window attribute data of the new window as the first window attribute data comprises:
assigning a window identifier to the new window, generating a window object corresponding to the new window, recording the assigned window identifier in the window object, and setting the third window attribute data of the new window (S503-S504); and
configuring the third window attribute data as the first window attribute data (S506).

6. The method according to claim 1, further comprising:
modifying the window displayed after the Activity is started.

7. The method according to claim 6, further comprising:
setting Activities required to be displayed among Activities associated with the Activity to be visible; or closing the Activities associated with the Activity.

8. A window displaying method of a mobile terminal, comprising:
determining whether a starting mode of an Activity is a window mode or not when the Activity is started (S301); and
after determining that the starting mode of the Activity is the window mode, setting first window attribute data in a message transfer object for starting the Activity to enable the Activity to display a window according to the first window attribute data (S302).

9. The method according to claim 8, wherein after determining that the starting mode of the Activity is the window mode and before setting the first window attribute data in the message transfer object for starting the Activity, the method further comprises:
if it is determined that an opened window is used when the Activity is started (S601-S602), determining a window identifier corresponding to the opened window, determining a window object corresponding to the opened window according to the determined window identifier, and obtaining second window attribute data recorded in the determined window object (S603-S605), wherein one window corresponds to one window identifier and one window identifier corresponds to one window object; and
setting the first window attribute data in the message transfer object for starting the Activity comprises:
setting the first window attribute data in the message transfer object for starting the Activity according to the obtained second window attribute data (S606).

10. The method according to claim 8, wherein after determining that the starting mode of the Activity is the window mode and before setting the first window attribute data in the message transfer object for starting the Activity, the method further comprises:
if it is determined that a new window will be opened when the Activity is started (S501-S502), assigning a window identifier to the new window to be opened, generating a window object corresponding to the new window, recording the assigned window identifier in the generated window object, and setting second window attribute data in the generated window object (S503-S504), wherein one window corresponds to one window identifier and one window identifier corresponds to one window object; and
setting the first window attribute data in the message transfer object for starting the Activity comprises:
setting the first window attribute data in the message transfer object for starting the Activity according to the second window attribute data in the generated window object (S506).

11. The method according to claim 9, wherein,
after determining whether the opened window is used or not when the Activity is started, the method further comprises: setting the window identifier in the message transfer object for starting the Activity to enable the Activity to record the window identifier; and
the method further comprises: when the Activity is required to be closed and the Activity to be closed is started in the window mode (S701-S702), judging whether Activities associated with the Activity to be closed exist or not; if the Activities associated with the Activity to be closed do not exist, deleting associated window objects of the Activity to be closed after closing the Activity to be closed (S703-S705),
wherein the Activities associated with the Activity to be closed comprise: other Activities recording window identifiers identical to the window identifier recorded by the Activity to be closed among opened Activities; and the associated window objects of the Activity to be closed comprise: window objects recording window identifiers identical to the window identifier recorded by the Activity to be closed.

12. The method according to claim 11, wherein after judging whether the Activities associated with the Activity to be closed exist or not, the method further comprises:
if the Activities associated with the Activity to be closed exist and the Activity to be closed is an Activity which is being displayed (S803-S804), setting Activities required to be displayed among the Activities associated with the Activity to be closed to be visible after closing the Activity to be closed (S805).

13. The method according to claim 9, wherein,
after determining whether the opened window is used or not when the Activity is started, the method further comprises: setting the window identifier in the message transfer object for starting the Activity to enable the Activity to record the window identifier; and
the method further comprises: receiving a window modification command (S901), and obtaining a command type, a window attribute parameter and a window identifier in the command (S902); determining Activities required to be displayed in a window required to be modified among Activities recording the obtained window identifier (S903); and sending the obtained command type and window attribute parameter to each of the determined Activities required to be displayed to enable each Activity to display the window according to the command type and the window attribute parameter (S904).

14. The method according to claim 13, wherein after obtaining the command type, the window attribute parameter and the window identifier in the command (S902), the method further comprises:
modifying second window attribute data recorded in a specific window object according to the obtained command type and window attribute parameter,
wherein the specific window object comprises: a window object recording the obtained window identifier.

15. A mobile terminal performing the method according to any one of claims 1 to 14.
